# EUROPEAN PATENT SPECIFICATION

(11) **EP 2 720 241 B1**
(45) Date of publication and mention of the grant of the patent: **30.03.2016**
(21) Application number: 13184990.3
(22) Date of filing: 18.09.2013
(51) Int. Cl.: H01H 25/00, B60N 2/02

(54) **Composite operating device**
Zusammengesetzte Betriebsvorrichtung
Dispositif de fonctionnement composite

(30) Priority: 15.10.2012 JP 2012227936
(43) Date of publication of application: 16.04.2014
(73) Proprietor: Sumitomo Wiring Systems, Ltd., Yokkaichi Mie 510-8503 (JP)
(72) Inventor: Inoue, Masatomo, Yokkaichi, Mie 510-8503 (JP)
(74) Representative: Horn Kleimann Waitzhofer Patentanwälte PartG mbB

(56) References cited:
- US-A1- 2004 144 628
- US-A1- 2009 294 259
- US-B1- 6 906 700

## Description

### TECHNICAL FIELD

The present invention relates to a composite operating device that is used to operate an electronic apparatus installed in a vehicle or the like.

### BACKGROUND ART

Conventionally, among operating devices that are provided in various electronic apparatuses, a composite operating device including an operating member that is operable to rotate about a specific axis of rotation and also operable to slide in a direction orthogonal to the axis of rotation is known. For example, when installed in a vehicle such as an automobile, such a composite operating device is used to operate a car navigation system, a seat of the vehicle, or the like.

For example, JP 2008-135324A discloses a composite operating device including an operating member that is operable to rotate about a specific axis of rotation and also operable to slide in a direction orthogonal to the axis of rotation, a slider that rotatably retains the operating member and slides in the same direction as a sliding direction of the operating member in conjunction with a sliding operation of the operating member, an inner circumferential ring that retains the slider so as to allow the slider to slide in the sliding direction, and a detecting element that detects a sliding operation of the operating member. The slider has a larger diameter than the operating member. The inner circumferential ring has a larger diameter than the slider and is disposed so as to surround the slider. The detecting element is retained while embedded in the inner circumferential ring and oriented in such a manner that it faces an outer side surface of the slider in the sliding direction. When the operating member has been operated to a stroke end in the sliding direction, the detecting element is pressed against by the outer side surface of the slider, and thus a predetermined signal is output from the detecting element.

JP 2008-135324A is an example of related art.
US 6,906,700 B1 shows a hand operated controller structured for allowing hand inputs to be converted into electrical outputs.
US 2004/0144628 A1 shows a multifunctional switch that includes an actuating element which is positioned in a rotational manner and can be displaced in a crosswise manner in a housing.

### SUMMARY OF THE INVENTION

A composite operating device such as that disclosed in JP 2008-135324A has a drawback that the overall dimensions of the device, especially the dimension in the sliding direction, increase. Specifically, the operating member itself is required to have such dimensions that it is easy to grip and operate for an operator. In addition, the slider has a larger shape than the operating member in order to retain the operating member. Furthermore, with respect to the sliding direction, it is necessary to secure a dimension corresponding to a stroke of the slider to allow the slider to slide. Therefore, for such a composite operating device, reducing the dimension in the sliding direction is a critical issue.

In this regard, in the composite operating device disclosed in JP 2008-135324A, the inner circumferential ring surrounding the slider is disposed outside the slider, and the inner Sumitomo Wiring Systems, Ltd.
circumferential ring is required to have as large a radius as the total of the radius of the slider, the amount of displacement of the slider for which the slider is to be displaced to press against the detecting element, and the thickness of the inner circumferential ring that is necessary to embed and retain the detecting element. Therefore, it is extremely difficult to reduce the dimension of the inner circumferential ring and the overall dimension of the device including the inner circumferential ring in the sliding direction.

The present invention was made to solve problems such as those described above, and it is an object thereof to provide a composite operating device that enables a reduction in the required overall dimension in the sliding direction.

In order to solve the problems, the present invention provides a composite operating device according to claim 1.

According to the present invention, displacement of the slider in the sliding direction is converted into displacement of the transmission member in the element pressing direction, and this displacement of the transmission member is used to press against the detecting element. Thus, the required overall dimension of the composite operating device with respect to the sliding direction is reduced. Specifically, the transmission member is retained by the transmission member retaining portion such that displacement of the slider in the sliding direction causes the transmission member to rotate, and the detecting element is fixed to the base while being oriented such that it can detect displacement of the transmission member due to the rotation of the transmission member. Thus, the required overall dimension in the sliding direction that is necessary for detection of displacement of the slider in the sliding direction is reduced.

In this case, it is preferable that the slider includes a retaining portion that retains the operating member from outside such that the operating member is rotatable about the axis of rotation, and the transmission member pressing portion is formed within a region that is sandwiched by a pair of straight lines passing through respective ends of the retaining portion in a direction orthogonal to the sliding direction, the direction being orthogonal to both the sliding direction and the direction parallel to the axis of rotation, and extending in a direction parallel to the sliding direction.

With this configuration, it is possible to reduce the dimension of the slider in the sliding direction without increasing the dimension of the slider in the direction orthogonal to the sliding direction, which is orthogonal to both the sliding direction and the axis of rotation.

Furthermore, in this case, it is preferable that the transmission member pressing portion is formed within a region that is sandwiched by a pair of straight lines passing through respective ends of the retaining portion in the sliding direction and extending in a direction parallel to the direction orthogonal to the sliding direction.

With this configuration, the required overall dimension of the composite operating device in the sliding direction is reduced even more.

Moreover, in the present invention, it is preferable that the transmission member retaining portion retains the transmission member such that the transmission member is rotatable about an axis extending in a direction orthogonal to both the sliding direction and the direction parallel to the axis of rotation, and the transmission member is shaped such that when the pressed portion of the transmission member is pressed by the transmission member pressing portion in the sliding direction, the transmission member rotates about the axis, thereby causing the element pressing portion of the transmission member to be displaced in the element pressing direction.

With this configuration, the structure for retaining the transmission member is simplified. That is, a mechanism that converts displacement of the slider in the sliding direction into displacement in the element pressing direction is constructed by a simple structure in which the transmission member is retained so as to be rotatable about the axis.

In this case, it is preferable that the pressed portion has a circular outer circumferential surface with a center axis extending in a direction parallel to the axis of the transmission member, and the slider includes a clamp portion that holds the pressed portion between the clamp portion and the transmission member pressing portion from both sides in the sliding direction.

With this configuration, when the slider slides, the transmission member rotates about the axis in conjunction with sliding of the slider. Thus, the occurrence of a malfunction such as rattling of the transmission member with respect to the slider is suppressed. Furthermore, when the slider returns to the neutral position, the element pressing portion of the transmission member returns to a position in which it is not pressed against the detecting element. Thus, the occurrence of a malfunction, for example, a situation in which even though the slider is located in the neutral position, the detecting element continues to be pressed against by the transmission member is suppressed.

As described above, according to the present invention, it is possible to provide a composite operating device that enables a reduction in the required overall dimension in the sliding direction.

### BRIEF DESCRIPTION OF THE DRAWINGS

- Fig. 1: is a partially cut-away perspective view of a composite operating device according to a first embodiment of the present invention;
- Fig. 2: is a perspective view showing a cross section viewed from a different angle than in Fig. 1;
- Fig. 3: is a plan view of the composite operating device shown in Fig. 1 in a state in which an operating member and a panel are omitted;
- Fig. 4: is a cross-sectional view taken along line IV-IV in Fig. 3;
- Fig. 5: is a cross-sectional view showing a relationship between a first engagement portion and a second engagement portion;
- Fig. 6: is a partially cut-away perspective view of a transmission member;
- Fig. 7: is a diagram showing a behavior of the transmission member;
- Fig. 8: is a diagram showing mounting of a slider to a base in the same cross section as in Fig. 2;
- Fig. 9: is a diagram showing a state in which mounting of the slider to the base has proceeded from the state in Fig. 8;
- Fig. 10: is an enlarged perspective view showing the vicinity of a second transmission member of a composite operating device according to a second embodiment of the present invention.

### EMBODIMENTS OF THE INVENTION

### First Embodiment

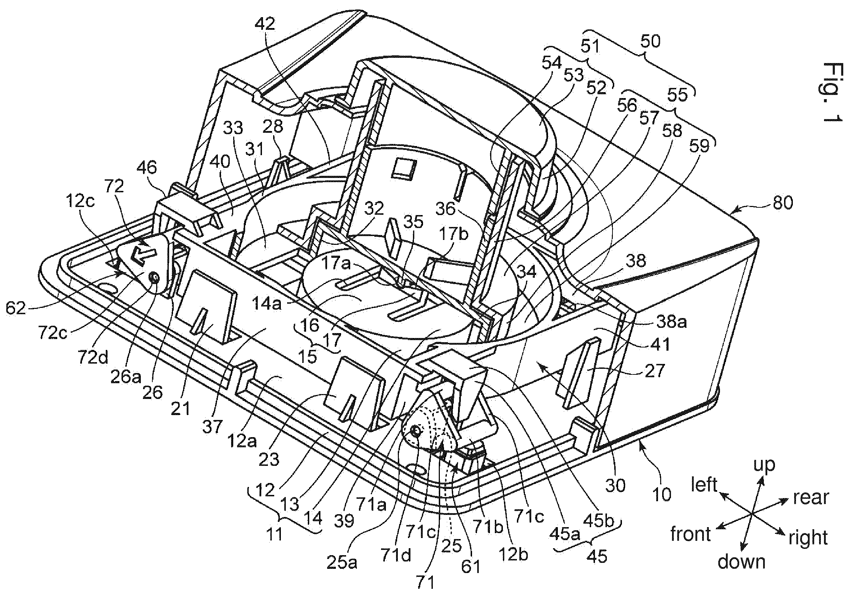

A composite operating device according to a first embodiment of the present invention will be described with reference to Figs. 1 to 9.

As shown in Fig. 1, a composite operating device of this embodiment includes a base 10, a slider 30 that is supported by the base 10 so as to be slidable in a specific sliding direction relative to the base 10, an operating member 50 that is operable to rotate about a specific axis of rotation and also operable to slide in the sliding direction, detecting elements that detect a sliding operation of the operating member 50, transmission members that transmit an operating force acting on the slider 30 due to a sliding operation of the operating member 50 to the detecting elements, and a panel 80 that is attached to the base 10. In this embodiment, the detecting elements include a first detecting element 61 that detects a sliding operation of the operating member 50 toward a first side and a second detecting element 62 that detects a sliding operation of the operating member 50 toward a second side, and the transmission members include a first transmission member 71 that transmits an operating force acting on the slider 30 due to a sliding operation of the operating member 50 toward the first side to the first detecting element 61 and a second transmission member 72 that transmits an operating force acting on the slider 30 due to a sliding operation of the operating member 50 toward the second side to the second detecting element 62. Moreover, in this embodiment, the base 10, the slider 30, and the operating member 50 have plane symmetry, where an orthogonal plane that is orthogonal to the sliding direction and passes through the axis of rotation is the plane of symmetry.

In the following description, as indicated in Fig. 1, a direction that is parallel to the axis of rotation will be referred to as "vertical direction", the sliding direction of the operating member 50 and the slider 30 will be referred to as "left-right direction", and a direction that is orthogonal to each of the vertical direction and the left-right direction will be referred to as "front-rear direction", "direction orthogonal to sliding direction", or "slide restriction direction". Moreover, a position in which the operating member 50 and the slider 30 are not displaced in the sliding direction relative to the base 10 will be referred to as "neutral position".

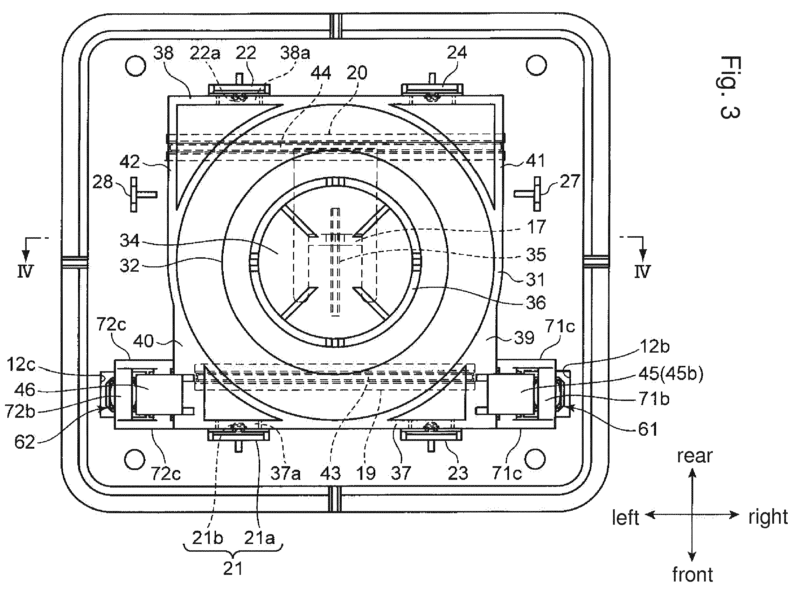

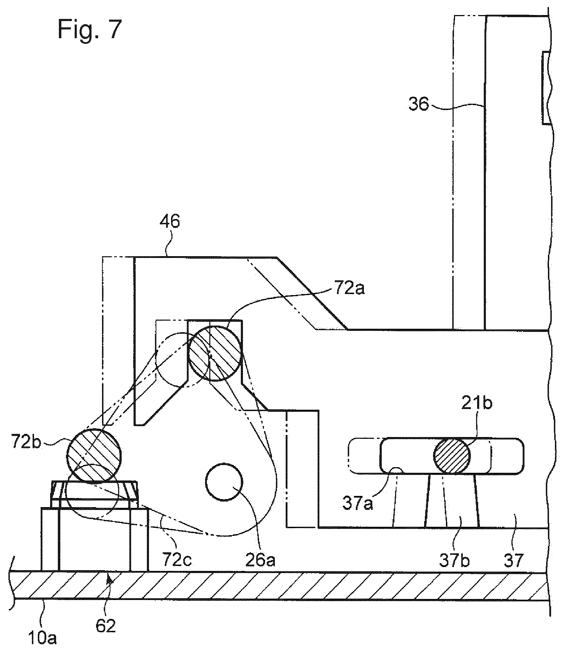

As shown in Figs. 1 to 3, the base 10 has a base main body 11, a flexible portion 15 that can be deformed to bend in a predetermined direction relative to the base main body 11, a guiding portion 18 that guides the slider 30 in the sliding direction, a first restricting portion 21 to a fourth restricting portion 24 that restrict displacement of the slider 30 in a direction (upward direction) away from the base main body 11, a first transmission member retaining portion 25 that retains the first transmission member 71, a second transmission member retaining portion 26 that retains the second transmission member 72, as well as a first stopper portion 27 and a second stopper portion 28 that abut against the slider 30 in the sliding direction. In addition, as shown in Fig. 7, a circuit board 10a is disposed on a rear surface of the base main body 11. Note that the operating member 50 and the panel 80 are omitted from Fig. 3.

The base main body 11 has a flat plate portion 12 having an opposing surface 12a that faces the slider 30 in the vertical direction, a circumferential wall 13 extending upward from the opposing surface 12a, and an upper wall 14 that is connected to an upper end of the circumferential wall 13. As shown in Fig. 3, the flat plate portion 12 has a rectangular shape when viewed from above. The flat plate portion 12 has a first hole 12b that exposes the first detecting element 61 mounted on the circuit board 10a to the side of the slider 30 (upper side), and a second hole 12c that exposes the second detecting element 62 mounted on the circuit board 10a to the side of the slider 30 (upper side). The first hole 12b is formed in a right (the upper side in Fig. 3) end portion of the flat plate portion 12 in the sliding direction, and the second hole 12c is formed in a left (the lower side in Fig. 3) end portion of the flat plate portion 12 in the sliding direction. The circumferential wall 13 extends upward from a central portion of the flat plate portion 12. The upper wall 14 is parallel to the flat plate portion 12. Slits 14a are formed in the upper wall 14. The slits 14a extend rearward from respective positions that are spaced apart from each other in the sliding direction, and are shaped such that their rear ends are continuous with each other. Thus, the flexible portion 15 can be deformed to bend in the vertical direction relative to the upper wall 14.

The flexible portion 15 is integrally formed with the upper wall 14 so as to be continuous with the upper wall 14. The flexible portion 15 has a flexible piece 16 and a first engagement portion 17. The flexible piece 16 has a base end portion that is continuous with the upper wall 14 on one end side (front side) in the slide restriction direction and a displacement end portion that is an end portion on the side (rear side) that is opposite to the base end portion and constitutes a free end. That is, the flexible piece 16 is in the form of a cantilever extending from the upper wall 14 in the front-rear direction, and is capable of bending deformation so that its free end side is displaced in the vertical direction relative to the upper wall 14. The first engagement portion 17 is provided in the displacement end portion of the flexible piece 16. The first engagement portion 17 has a shape that gradually increases in vertical dimension from the center in the sliding direction toward the outer sides in the sliding direction. The first engagement portion 17 has a locking portion 17a that is formed at the center in the sliding direction, and a sliding surface 17b having a shape continuously extending from the locking portion 17a toward both of the outer sides in the left-right direction. The locking portion 17a locks the second engagement portion 35 by abutting against the second engagement portion 35 from both sides in the sliding direction, thereby retaining the slider 30 in the neutral position. The sliding surface 17b has a shape that linearly extends gradually upward from the locking portion 17a toward both of the outer sides in the sliding direction.

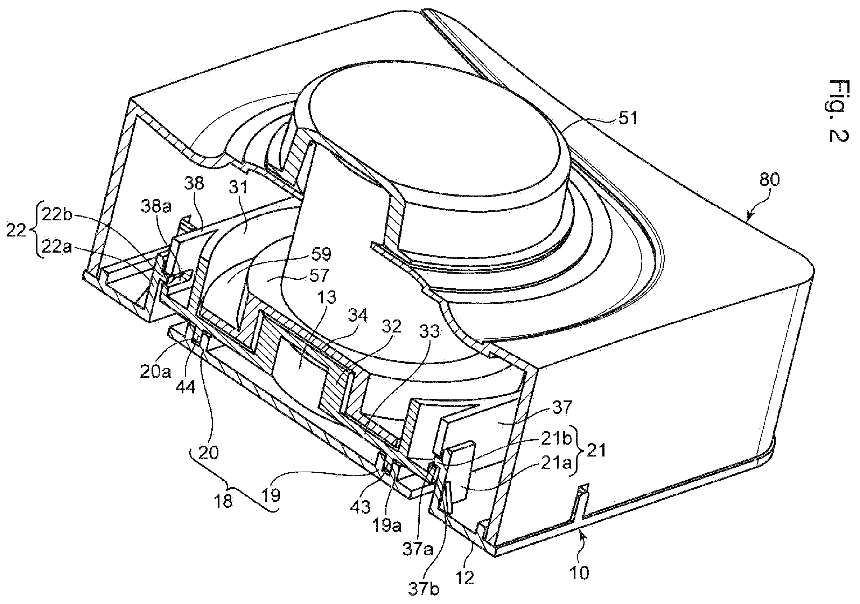

As shown in Figs. 2 and 3, the guiding portion 18 has a first guiding portion 19 and a second guiding portion 20 that are formed at positions located on opposite sides of the axis of rotation and spaced apart from each other in the slide restriction direction. The guiding portions 19 and 20 each protrude from the opposing surface 12a to the side of the slider 30 (upper side), and have a shape that is elongated in the sliding direction. The first guiding portion 19 has an outer rail portion and an inner rail portion that is formed nearer to the axis of rotation than the outer rail portion is and faces the outer rail portion at a predetermined distance from the outer rail portion. Like the first guiding portion 19, the second guiding portion 20 also has an outer rail portion and an inner rail portion. In other words, the guiding portions 19 and 20 each have the shape of a recess that is open to the side of the slider 30. In the first guiding portion 19, a first guided portion 43, which will be described later, is sandwiched between the outer rail portion and the inner rail portion. In the second guiding portion 20, a second guided portion 44, which will be described later, is sandwiched between the outer rail portion and the inner rail portion.

The first to fourth restricting portions 21 to 24 are each located outside the guiding portion 18 with respect to the slide restriction direction and have a shape that protrudes from the opposing surface 12a to the side of the slider 30 (upper side). As shown in Fig. 3, the first restricting portion 21 is formed outside the first guiding portion 19 (forward of the first guiding portion 19) with respect to the slide restriction direction. The second restricting portion 22 is formed outside the second guiding portion 20 with respect to the slide restriction direction. The third restricting portion 23 is formed at a position that is located outside the first guiding portion 19 with respect to the slide restriction direction and at a distance from the first restricting portion 21 to the right side with respect to the sliding direction. The fourth restricting portion 24 is formed at a position that is located outside the second guiding portion 20 with respect to the slide restriction direction and at a distance from the second restricting portion 22 to the right side with respect to the sliding direction.

The first restricting portion 21 has a first upright protruding piece 21a protruding upright from the opposing surface 12a to the side of the slider 30, and a first sliding contact portion 21b protruding inward (rearward) in the slide restriction direction from the first upright protruding piece 21 a. The first upright protruding piece 21 a has a shape that can be deformed to bend so as to allow the first sliding contact portion 21b to be displaced outward (forward) in the slide restriction direction. As shown in Figs. 2 and 7, the first sliding contact portion 21b has a cylindrical shape with a central axis extending in a direction parallel to the slide restriction direction. The first sliding contact portion 21b slides on a first restricted surface 37a, which will be described later, in the sliding direction while coming into line contact with the first restricted surface 37a. That is to say, the first sliding contact portion 21b comes into contact with the first restricted surface 37a from the side (upper side) that is opposite to the opposing surface 12a, thereby restricting displacement of the slider 30 in a direction away from the base 10, and also comes into sliding contact with the first restricted surface 37a in the sliding direction, thereby allowing the slider 30 to slide.

The second restricting portion 22 is plane-symmetrical to the first restricting portion 21, where a parallel plane that is parallel to the sliding direction and passes through the axis of rotation is the plane of symmetry. That is, the second restricting portion 22 has a second upright protruding piece 22a protruding upright from the opposing surface 12a to the side of the slider 30, and a second sliding contact portion 22b protruding inward (to the side of the first restricting portion 21) in the slide restriction direction from the second upright protruding piece 22a. Note that the second upright protruding piece 22a and the second sliding contact portion 22b also are plane-symmetrical to the first upright protruding piece 21a and the first sliding contact portion 21b, where the parallel plane is the plane of symmetry, and so a description of the second upright protruding piece 22a and the second sliding contact portion 22b will be omitted.

The third restricting portion 23 is plane-symmetrical to the first restricting portion 21, where the orthogonal plane is the plane of symmetry. The fourth restricting portion 24 is plane-symmetrical to the second restricting portion 22, where the orthogonal plane is the plane of symmetry. In other words, the third restricting portion 23 corresponds to a figure produced by a translation of the first restricting portion 21 to the right, and the fourth restricting portion 24 corresponds to a figure produced by a translation of the second restricting portion 22 to the right. Therefore, a description of the third restricting portion 23 and the fourth restricting portion 24 will be omitted.

Note that although the base 10 of this embodiment has the first to fourth restricting portions 21 to 24, it is sufficient that the base 10 has at least one restricting portion.

The transmission member retaining portions 25 and 26 retain the respective transmission members such that displacement of the slider 30 in the sliding direction causes the transmission members to rotate. Specifically, the transmission member retaining portions 25 and 26 retain the respective transmission members such that a transmission member that receives a pressing force from the slider 30 in the sliding direction is displaced in an element pressing direction in which the transmission member presses against the detecting element corresponding to that transmission member.

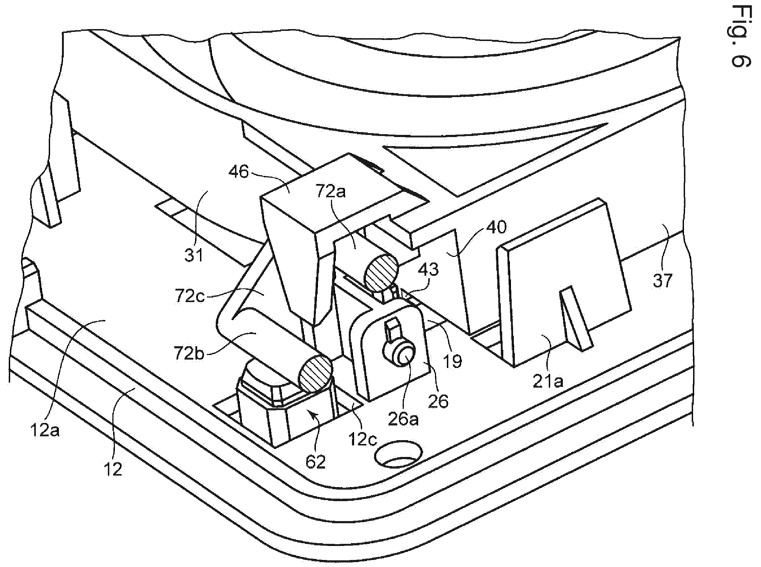

The first transmission member retaining portion 25 is formed forward of the parallel plane and rightward of the third restricting portion 23. More specifically, the first transmission member retaining portion 25 is formed between the slider 30 and the first hole 12b. The first transmission member retaining portion 25 has a center shaft 25a having a shape extending in the slide restriction direction. The second transmission member retaining portion 26 is plane-symmetrical to the first transmission member retaining portion 25, where the orthogonal plane is the plane of symmetry. That is, the second transmission member retaining portion 26 has a center shaft 26a having a shape extending in the slide restriction direction (see Figs. 1 and 6).

The first stopper portion 27 has a shape protruding from the opposing surface 12a to the side of the slider 30 (upper side). As shown in Fig. 3, the first stopper portion 27 is formed rearward of the parallel plane and rightward of the slider 30. The first stopper portion 27 defines a right end (stroke end of the operating member 50) of sliding of the slider 30 in the sliding direction. That is, when the slider 30 slides to the right, the first stopper portion 27 abuts against the slider 30, thereby restricting sliding of the slider 30. The second stopper portion 28 is plane-symmetrical to the first stopper portion 27, where the orthogonal plane is the plane of symmetry. Therefore, a description of the second stopper portion 28 will be omitted.

The slider 30 has a retaining portion 31 that retains the operating member 50, an inner tube portion 32 that is formed inside the retaining portion 31, a bottom wall 33, an opposing wall 34 that faces the upper wall 14, the second engagement portion 35 that has a shape engageable with the first engagement portion 17, an attachment tube portion 36 to which the operating member 50 is attached, a first restricted wall 37 that is restricted by the first and third restricting portions 21 and 23, a second restricted wall 38 that is restricted by the second and fourth restricting portions 22 and 24, a first transmission member pressing portion 39 that presses against the first transmission member 71, a second transmission member pressing portion 40 that presses against the second transmission member 72, a first abutment wall 41 that abuts against the first stopper portion 27, a second abutment wall 42 that abuts against the second stopper portion 28, the first guided portion 43 that is guided by the first guiding portion 19, the second guided portion 44 that is guided by the second guiding portion 20, a first clamp portion 45 that holds the first transmission member 71 from both sides, and a second clamp portion 46 that holds the second transmission member 72 from both sides.

The retaining portion 31 has a cylindrical shape that is coaxial with the axis of rotation, and retains the operating member 50 from outside such that the operating member 50 is rotatable about the axis of rotation. The retaining portion 31 has a larger shape than the operating member 50. That is, the operating member 50 is rotatably retained inside the retaining portion 31.

The inner tube portion 32 is formed inside the retaining portion 31. The inner tube portion 32 has a cylindrical shape that is coaxial with the axis of rotation and is smaller than the retaining portion 31.

The bottom wall 33 connects a lower end of the retaining portion 31 to a lower end of the inner tube portion 32. The bottom wall 33 has a flat plate-like shape and faces the opposing surface 12a while being oriented such that it is parallel to the opposing surface 12a.

The opposing wall 34 has a circular plate-like shape that closes an upper end of the inner tube portion 32, and is parallel to the bottom wall 33.

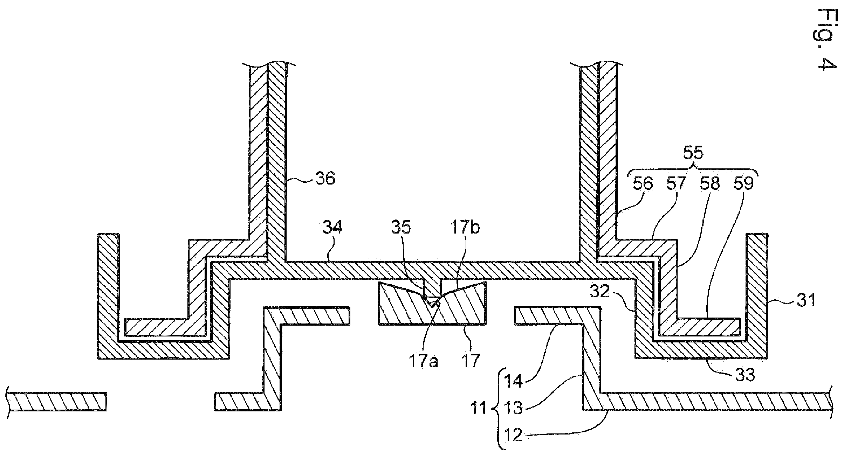

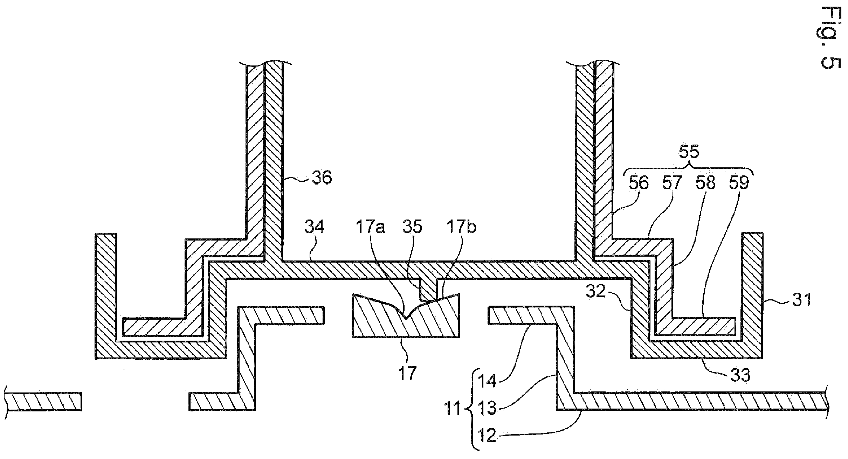

The second engagement portion 35 protrudes from the opposing wall 34 to the side of the upper wall 14 (lower side), and has a shape that passes through the center of the opposing wall 34 and is elongated in the slide restriction direction. In this embodiment, the second engagement portion 35 includes a locked portion that is locked into the locking portion 17a of the first engagement portion 17. When no operating force in the sliding direction is applied to the operating member 50, the locked portion of the second engagement portion 35 is locked into the locking portion 17a, and therefore the operating member 50 and the slider 30 are retained in the neutral position (Fig. 4). Then, when the operating member 50 is operated in the sliding direction, the locked portion slides on the sliding surface 17b in the sliding direction and simultaneously presses the first engagement portion 17 to the side of the opposing surface 12a (lower side), thereby causing bending deformation of the flexible piece 16 (Fig. 5).

The attachment tube portion 36 has a cylindrical shape that is coaxial with the axis of rotation and is smaller than the inner tube portion 32. The attachment tube portion 36 extends upward from the opposing wall 34.

The first restricted wall 37 has a shape that is elongated in a direction parallel to the sliding direction. The first restricted wall 37 is in contact with the retaining portion 31 at a front end portion of the retaining portion 31. As shown in Figs. 2, 3, and 7, the first restricted wall 37 has a first slot that can receive the first sliding contact portion 21b and that has a shape elongated in the sliding direction. The slider 30 is capable of sliding in the sliding direction in a state in which the first sliding contact portion 21b is received in the first slot. That is, the dimension of the first slot in its lengthwise direction (left-right direction) is set to a dimension that allows sliding of the slider 30 in the left-right direction. An inner circumferential surface surrounding the first slot of the first restricted wall 37 has the first restricted surface 37a that comes into contact with a lower end of the first sliding contact portion 21b when the slider 30 is displaced in the direction away from the base 10. In other words, a lower surface of the inner circumferential surface surrounding the first slot of the first restricted wall 37 constitutes the first restricted surface 37a. As a result of the first restricted surface 37a coming into contact with the first sliding contact portion 21b, displacement of the slider 30 in the direction away from the base 10 is restricted. In addition, as shown in Figs. 7 to 9, the first restricted wall 37 has a first inclined portion 37b that is formed in an outer surface of the first restricted wall 37 under the first slot. The first inclined portion 37b is formed in order to facilitate attachment of the slider 30 to the base 10. Specifically, the first inclined portion 37b has a shape in which the thickness (dimension in the front-rear direction) of the first restricted wall 37 gradually decreases from the first slot toward the lower end. These aspects also hold true on the side of the third restricting portion 23.

The second restricted wall 38 has a shape that is elongated in the direction parallel to the sliding direction. The second restricted wall 38 is in contact with the retaining portion 31 at a rear end portion of the retaining portion 31. As shown in Figs. 2 and 3, the second restricted wall 38 has a second slot that can receive the second sliding contact portion 22b, a second restricted surface 38a that comes into contact with the second sliding contact portion 22b, and a second inclined portion. The second slot, the second restricted surface 38a, and the second inclined portion of the second restricted wall 38 are plane-symmetrical to the first slot, the first restricted surface 37a, and the first inclined portion 37b of the first restricted wall 37, where the parallel plane is the plane of symmetry. This also holds true on the side of the fourth restricting portion 24.

The transmission member pressing portions 39 and 40 are portions of the slider 30 that press against the respective transmission members in the sliding direction. Specifically, the first transmission member pressing portion 39 has a shape that is elongated in a direction parallel to the slide restriction direction, and connects a right end portion of the first restricted wall 37 to an outer circumferential surface of the retaining portion 31. The first transmission member pressing portion 39 is continuous with the outer circumferential surface of the retaining portion 31 at a location inward of the right end portion of the retaining portion 31, and also is perpendicular to the opposing surface 12a. When the operating member 50 is operated to slide to the right, the first transmission member pressing portion 39 presses the first transmission member 71 to the right. The second transmission member pressing portion 40 is plane-symmetrical to the first transmission member pressing portion 39, where the orthogonal plane is the plane of symmetry, and so a description of the second transmission member pressing portion 40 will be omitted.

The first abutment wall 41 has a shape that is elongated in the direction parallel to the slide restriction direction, and connects a right end portion of the second restricted wall 38 to the outer circumferential surface of the retaining portion 31. The first abutment wall 41 is in contact with the retaining portion 31 at a right end portion of the retaining portion 31. The operating member 50 is allowed to slide to the right in the sliding direction until the first abutment wall 41 abuts against the first stopper portion 27. The second abutment wall 42 is plane-symmetrical to the first abutment wall 41, where the orthogonal plane is the plane of symmetry, and so a description of the second abutment wall 42 will be omitted.

The first guided portion 43 is shaped such that the first guided portion 43 can be removably fitted into the first guiding portion 19 in the direction parallel to the axis of rotation and can be guided in the sliding direction by the first guiding portion 19 in the fitted state (the state shown in Fig. 2). Specifically, the first guided portion 43 protrudes from the bottom wall 33 toward the opposing surface 12a (lower side) and has a shape that is elongated in the sliding direction. In a state in which the first guided portion 43 is fitted in the first guiding portion 19, the first guided portion 43 is sandwiched by the outer rail portion and the inner rail portion of the first guiding portion 19 from both sides in the slide restriction direction and thus restricted so as not to be displaced in the slide restriction direction, but is allowed to slide in the sliding direction relative to these rail portions.

The second guided portion 44 is positioned symmetrically to the first guided portion 43 with respect to the parallel plane. In addition, as shown in Fig. 3, the second guided portion 44 has a shape that is symmetrical to the first guided portion 43 with respect to the parallel plane except that its length in the sliding direction is larger than that of the first guided portion 43. Therefore, a description of the second guided portion 44 will be omitted.

Note that each of the inner rail portion of the first guiding portion 19 and the inner rail portion of the second guiding portion 20 can be omitted. In that case, an inner surface (first guiding surface) 19a of the outer rail portion of the first guiding portion 19 restricts the first guided portion 43 from outside with respect to the slide restriction direction, and an inner surface (second guiding surface) 20a of the outer rail portion of the second guiding portion 20 restricts the second guided portion 44 from outside with respect to the slide restriction direction. Alternatively, each of the outer rail portion of the first guiding portion 19 and the outer rail portion of the second guiding portion 20 can be omitted. In that case, an outer surface (first guiding surface) of the inner rail portion of the first guiding portion 19 restricts the first guided portion 43 from inside with respect to the slide restriction direction, and an outer surface (second guiding surface) of the inner rail portion of the second guiding portion 20 restricts the second guided portion 44 from inside with respect to the slide restriction direction.

The clamp portions 45 and 46 each hold a part of the respective transmission members 71 and 72 from both sides, thereby causing the transmission members 71 and 72 to be displaced together with the slider 30 when the slider 30 slides. In this embodiment, the first clamp portion 45 has a shape that holds the first transmission member 71, more specifically, a pressed portion 71a, which will be described later, between the first clamp portion 45 and the first transmission member pressing portion 39 from both sides in the sliding direction. Specifically, the first clamp portion 45 has an opposing piece 45a that faces the first transmission member pressing portion 39 and is spaced apart from the first transmission member pressing portion 39 by a distance that is necessary for the pressed portion 71a to be held between the opposing piece 45a and the first transmission member pressing portion 39, as well as a connecting piece 45b that connects an upper end of the first transmission member pressing portion 39 to an upper end of the opposing piece 45a. The opposing piece 45a is perpendicular to the opposing surface 12a. The connecting piece 45b is parallel to the opposing surface 12a. The second clamp portion 46 is plane-symmetrical to the first clamp portion 45, where the orthogonal plane is the plane of symmetry, and so a description of the second clamp portion 46 will be omitted.

The operating member 50 is retained by the slider 30 so as to be rotatable about the axis of rotation, and also is operable to slide so that it slides in the sliding direction together with the slider 30. The operating member 50 has a dial 51 that is operable to rotate and to slide by an operator, and an inner member 55 that is connected to the dial 51 so as to simultaneously rotate with the dial 51. Note that although the dial 51 and the inner member 55 of this embodiment are composed of separate members, the dial 51 and the inner member 55 may also be formed as a single member. Moreover, the dial 51 may be omitted. In that case, it is preferable that the inner member 55 has a shape whose upper end is closed.

The dial 51 has a cylindrical gripped portion 52 to be gripped by the operator, a circular plate-shaped top wall 53 that closes an upper end of the gripped portion 52, and a inner member connecting portion 54 that is connected to the inner member. The gripped portion 52 is coaxial with the axis of rotation. The inner member connecting portion 54 has a cylindrical shape that is smaller than the gripped portion 52 and is coaxial with the axis of rotation. The inner member connecting portion 54 extends downward from a position on a lower surface of the top wall 53 that is located inward (on the side of the axis of rotation) of the gripped portion 52.

The inner member 55 has a tubular dial connecting portion 56 that is connected to the dial 51, a first projecting portion 57 projecting outward in a radial direction from the entire circumference of a lower end of the dial connecting portion 56, an outer tube portion 58 having a tubular shape extending downward from an outer edge of the first projecting portion 57, and a second projecting portion 59 projecting outward in the radial direction from a lower end of the outer tube portion 58. The dial connecting portion 56 has a larger shape than the inner member connecting portion 54. The dial connecting portion 56 is connected to the inner member connecting portion 54 so as to be incapable of relative rotation with respect to the inner member connecting portion 54. The outer tube portion 58 has a larger diameter than the inner tube portion 32. The second projecting portion 59 has a shape that fits between an inner surface of the retaining portion 31 and an outer surface of the inner tube portion 32 and is supported on the bottom wall 33.

The first detecting element 61 detects that the operating member 50 has been slid to a specific sliding operation position that is located on the right side in the sliding direction. The first detecting element 61 is mounted on the circuit board 10a so as to be located in the first hole 12b while being oriented in such a manner that it can detect displacement of the first transmission member 71 to the side of the opposing surface 12a (element pressing direction). In this embodiment, a tactile switch is used as the first detecting element 61. The second detecting element 62 detects that the operating member 50 has been slid to a specific sliding operation position that is located on the left side in the sliding direction. The second detecting element 62 is mounted on the circuit board 10a so as to be located in the second hole 12c while being oriented in such a manner that it can detect displacement of the second transmission member 72 in the element pressing direction. In this embodiment, a tactile switch of the same type as the first detecting element 61 is used as the second detecting element 62.

The transmission members 71 and 72 are respectively retained by the transmission member retaining portions 25 and 26, thereby transmitting an operating force acting on the slider 30 due to a sliding operation of the operating member 50 to the detecting elements 61 and 62. Specifically, the first transmission member 71 has the pressed portion 71a that is pressed against by the first transmission member pressing portion 39, an element pressing portion 71b that presses the first detecting element 61 in the element pressing direction, and a pair of plate portions 71c facing each other in the slide restriction direction. The pressed portion 71a has a cylindrical shape with an axis extending in a direction (front-rear direction) parallel to the center shaft 25a of the first transmission member retaining portion 25. The pressed portion 71a is held between the first transmission member pressing portion 39 and the opposing piece 45a. The element pressing portion 71b has the same shape as the pressed portion 71a. The pressed portion 71a and the element pressing portion 71b are each disposed between the pair of plate portions 71c so as to connect the plate portions 71c to each other. The pair of plate portions 71c each have a bearing hole 71d into which the center shaft 25a can be inserted. The bearing hole 71d is formed at a position in each of the pair of plate portions 71c that is spaced apart from a straight line connecting the pressed portion 71a and the element pressing portion 71b. In other words, the pressed portion 71a, the element pressing portion 71b, and the bearing hole 71d are arranged in a triangle. Thus, the first transmission member 71 can rotate about the center shaft 25a in a state in which it is retained by the first transmission member retaining portion 25.

Like the first transmission member 71, the second transmission member 72 has a pressed portion 72a, an element pressing portion 72b, and a pair of plate portions 72c each having a bearing hole 72d (see Figs. 6 and 7). The second transmission member 72 has a shape that is symmetrical to the first transmission member 71 with respect to the orthogonal plane, and so a description of the second transmission member 72 will be omitted.

The panel 80 has a shape that exposes the dial 51 to the outside and covers the other members, namely, the base 10, the slider 30, the detecting elements 61 and 62, the transmission members 71 and 72, and the inner member 55. Specifically, the panel 80 has an opening having a diameter that is larger than the diameter of the dial connecting portion 56 and smaller than the diameter of the gripped portion 52. As shown in Figs. 1 and 2, a lower end of the panel 80 is attached to the base 10.

Next, an assembly process of the composite operating device of this embodiment will be described.

First, the circuit board 10a on which the detecting elements 61 and 62 are mounted is prepared, and the base 10 is attached to an upper surface of the circuit board 10a. At this time, the first detecting element 61 is exposed through the first hole 12b of the base 10, and the second detecting element 62 is exposed through the second hole 12c.

Then, the first transmission member 71 is attached to the first transmission member retaining portion 25, and the second transmission member 72 is attached to the second transmission member retaining portion 26. Specifically, the first transmission member 71 is attached to the first transmission member retaining portion 25 so that the center shaft 25a of the first transmission member retaining portion 25 is inserted into the bearing holes 71d of the first transmission member 71. Similarly, the second transmission member 72 is attached to the second transmission member retaining portion 26 so that the center shaft 26a of the second transmission member retaining portion 26 is inserted into the bearing holes 72d of the second transmission member 72.

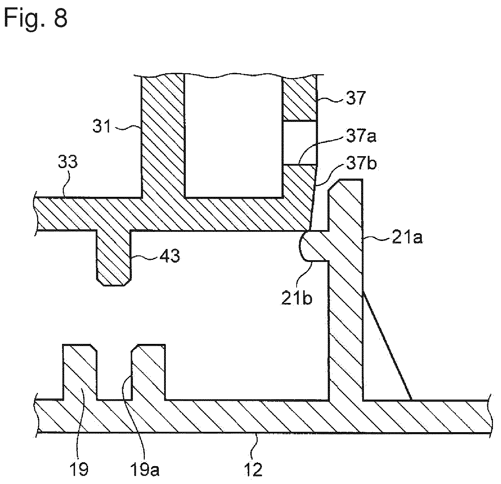

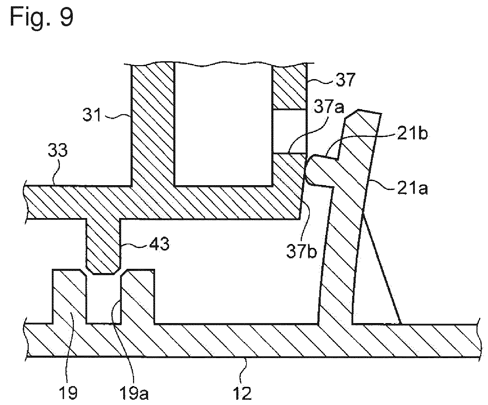

Subsequently, the slider 30 is mounted to the base 10. Specifically, the slider 30 is brought near to the base 10 while being oriented in such a manner that the second engagement portion 35 faces the first engagement portion 17 and the guided portions 43 and 44 face the respective guiding portions 19 and 20. At this time, the first guided portion 43 approaches a fitting direction in which it is fitted into the first guiding portion 19. In the process until the first guided portion 43 is fitted into the first guiding portion 19, the lower end of the first restricted wall 37 comes into contact with an upper end of the first sliding contact portion 21b (see Fig. 8). Note that since the second guided portion 44 behaves in the same manner as the first guided portion 43 and the second to fourth restricting portions 22 to 24 behave in the same manner as the first restricting portion 21, a description here will be given taking the side of the first guided portion 43 and the first restricting portion 21 as an example. From this state (the state in Fig. 8), when the slider 30 is brought nearer to the base 10 in the fitting direction, the first upright protruding piece 21 a is deformed to bend so as to allow outward displacement of the first sliding contact portion 21b in the slide restriction direction (Fig. 9). At this time, the first sliding contact portion 21b slides on the outer surface of the first inclined portion 37b. Then, when the first guided portion 43 is fitted into the first guiding portion 19, the first sliding contact portion 21b is inserted into the first slot and abuts against the first restricted surface 37a. At this time, that is, when mounting of the slider 30 to the base 10 is finished, the second engagement portion 35 engages with the first engagement portion 17, so that the slider 30 is retained in the neutral position.

At the same time, the first clamp portion 45 holds the pressed portion 71a from both sides, and the second clamp portion 46 holds the pressed portion 72a from both sides. Specifically, the pressed portion 71a is inserted between the first transmission member pressing portion 39 and the opposing piece 45a, and the pressed portion 72a is inserted between the second transmission member pressing portion 40 and an opposing piece of the second clamp portion 46. Thus, the first transmission member 71 and the second transmission member 72 are each displaced together with the slider 30 when the slider 30 slides in the sliding direction.

Then, the inner member 55 is mounted to the slider 30. Specifically, the inner member 55 is brought near to the slider 30 so that the dial connecting portion 56 is externally fitted to the attachment tube portion 36. Then, the second projecting portion 59 is received on the bottom wall 33, and thus mounting of the inner member 55 to the slider 30 is finished.

Note that mounting of the inner member 55 to the slider 30 may be performed simultaneously with mounting of the slider 30 to the base 10, or may be performed prior to mounting of the slider 30 to the base 10.

Subsequently, the panel 80 is fixed to the base 10 so that an upper portion of the inner member 55 is exposed through the opening of the panel 80.

Finally, the dial 51 is mounted to the inner member 55 in such a manner that the inner member connecting portion 54 is internally fitted to the dial connecting portion 56.

The composite operating device of this embodiment is assembled by the foregoing process.

Next, operations of the composite operating device when the operating member 50 is operated to slide and when it is operated to rotate will be described in this order.

As shown in Fig. 4, when no operating force in the sliding direction is applied to the operating member 50, the operating member 50 is retained in the neutral position by the locking portion 17a of the flexible portion 15 locking the locked portion of the second engagement portion 35.

When the operating member 50 is operated to slide from the neutral position to, for example, the left in the sliding direction, the slider 30 also slides in the same direction. At this time, as shown in Fig. 5, the locked portion of the second engagement portion 35 leaves the locking portion 17a and presses the sliding surface 17b downward. Thus, the displacement end portion of the flexible piece 16 is deformed to bend downward. Due to the elastic returning force of the flexible piece 16 associated with the bending deformation, the operating member 50 receives a biasing force that acts in the direction (rightward direction) in which the operating member 50 is returned to the neutral position.

At this time, as shown in Fig. 7, the pressed portion 72a of the second transmission member 72 is pressed to the left by the second transmission member pressing portion 40. Thus, the second transmission member 72 rotates counterclockwise about the center shaft 26a. This causes the element pressing portion 72b to be displaced in the element pressing direction, and the second detecting element 62 is pressed against by the element pressing portion 72b, so that the leftward sliding operation of the operating member 50 is detected. That is, displacement of the slider 30 in the sliding direction causes the second transmission member 72 to rotate, and displacement of the second transmission member 72 due to this rotation is used to press against the second detecting element 62. Thus, the required overall dimension of the composite operating device with respect to the sliding direction is reduced. In addition, at this time, the pressed portion 71a of the first transmission member 71 is pressed to the left by the first clamp portion 45 (the opposing piece 45a). Thus, the first transmission member 71 follows the slider 30 in such a manner that it rotates counterclockwise about the center shaft 25a. As a result, the element pressing portion 71b is spaced apart from the first detecting element 61.

Moreover, during the sliding operation, the first guided portion 43 is guided by the first guiding portion 19, and the second guided portion 44 is guided by the second guiding portion 20, so that displacement of the operating member 50 and the slider 30 in the slide restriction direction is restricted. Furthermore, during the sliding operation, the sliding contact portions of the restricting portions 21 to 24 abut against the respective restricted surfaces from the upper side, thereby restricting upward displacement of the slider 30.

From this state, that is, the state in which the operating member 50 has been operated to slide to the left, when the sliding operating force acting on the operating member 50 in the leftward direction is removed, the elastic returning force of the flexible piece 16 returns the slider 30 and the operating member 50 to the neutral position. At this time, the pressed portion 71a of the first transmission member 71 is pressed to the right by the first transmission member pressing portion 39, and thus the first transmission member 71 is displaced together with the slider 30 while rotating clockwise about the center shaft 25a. The pressed portion 72a of the second transmission member 72 is pressed to the right by the opposing piece of the second clamp portion 46, and thus the second transmission member 72 follows the slider 30 in such a manner that it rotates clockwise about the center shaft 26a. The foregoing description also applies to the case where the operating member 50 is operated to slide to the right in the sliding direction.

Next, when the operating member 50 in the neutral position is operated to rotate, the inner member 55 rotates about the axis of rotation inside the retaining portion 31. At this time, the second projecting portion 59 presses against a rotation detecting element mounted on the circuit board 10a (a unit switch capable of detecting normal and reverse rotations of the operating member 50), which is not shown, so that the rotating operation of the operating member 50 is detected. During the rotating operation, engagement between the first engagement portion 17 and the second engagement portion 35 reliably retains the operating member 50 in the neutral position.

As described above, with the composite operating device of this embodiment, displacement of the slider 30 in the sliding direction is converted into displacement of the transmission member in the element pressing direction, and this displacement of the transmission member is used to press against the detecting element. Thus, the required overall dimension of the composite operating device with respect to the sliding direction is reduced. Specifically, the first transmission member 71 is retained by the first transmission member retaining portion 25 such that displacement of the slider 30 in the sliding direction is converted into displacement of the first transmission member 71 in the element pressing direction (vertical direction), and the first detecting element 61 is fixed to the base 10 while being oriented such that it can detect displacement of the first transmission member 71 in the element pressing direction. Thus, the required overall dimension in the sliding direction that is necessary for detection of displacement of the slider 30 in the sliding direction is reduced. This also holds true on the side of the second transmission member 72 and the second detecting element 62.

Moreover, the transmission member pressing portions 39 and 40 of this embodiment are formed within a region that is sandwiched by a pair of straight lines passing through the two ends of the retaining portion 31 in the direction orthogonal to the sliding direction and extending in the direction parallel to the sliding direction. Thus, it is possible to reduce the dimension of the slider 30 in the sliding direction without increasing the dimension of the slider 30 in the direction orthogonal to the sliding direction (slide restriction direction).

Furthermore, the transmission member pressing portions 39 and 40 of this embodiment are formed within a region that is sandwiched by a pair of straight lines passing through the two ends of the retaining portion 31 in the sliding direction and extending in a direction parallel to the direction orthogonal to the sliding direction. Thus, the required overall dimension of the composite operating device in the sliding direction is reduced even more.

Moreover, the first transmission member retaining portion 25 of this embodiment retains the first transmission member 71 such that the first transmission member 71 is rotatable about the center shaft 25a, so that when the pressed portion 71a is displaced in the sliding direction, the element pressing portion 71b is displaced in the element pressing direction. Thus, the structure for retaining the first transmission member 71 is simplified. In other words, a mechanism that converts displacement of the slider 30 in the sliding direction into displacement in the element pressing direction is constructed by a simple structure in which the first transmission member 71 is retained so as to be rotatable about the center shaft 25a. This also holds true on the side of the second transmission member 72 and the second transmission member retaining portion 26.

In addition, the pressed portion 71a of the first transmission member 71 has a cylindrical shape with an axis extending in the direction parallel to the center shaft 25a, and the slider 30 has the first clamp portion 45 that holds the pressed portion 71a between the first clamp portion 45 and the first transmission member pressing portion 39 from both sides in the sliding direction. Thus, whenever the slider 30 slides, the first transmission member 71 rotates about the center shaft 25a and is thus displaced together with the slider 30. Accordingly, the occurrence of a malfunction such as rattling of the first transmission member 71 with respect to the slider 30 is suppressed. Furthermore, when the slider 30 returns to the neutral position from a state in which the first detecting element 61 is pressed against by the first transmission member 71, the element pressing portion 71b of the first transmission member 71 returns to a position in which it is not pressed against the first detecting element 61. Thus, erroneous detection by the first detecting element 61 is prevented. That is, the occurrence of a malfunction, for example, a situation in which even though the slider 30 is located in the neutral position, the first detecting element 61 continues to be pressed against by the first transmission member 71 is suppressed. This also holds true on the side of the second clamp portion 46 and the second detecting element 62.

Moreover, in this embodiment, a structure is constructed which retains the operating member 50 in the neutral position by engagement between the first engagement portion 17 of the base 10 and the second engagement portion 35 of the slider 30 and allows the operating member 50 to slide by bending deformation of the flexible portion 15. Thus, the number of components is reduced, and the assembly process is simplified. Specifically, the base 10 includes the flexible portion 15 that is capable of elastic bending deformation in the vertical direction relative to the slider 30, the flexible portion 15 has the first engagement portion 17 that engages with the second engagement portion 35 of the slider 30, and the slider 30 has the second engagement portion 35 that engages with the first engagement portion 17. Accordingly, a structure is constructed in which when no operating force in the sliding direction is applied to the operating member 50, the operating member 50 is retained in the neutral position by the engagement between the locking portion 17a of the first engagement portion 17 and the locked portion of the second engagement portion 35, and when an operating force in the sliding direction is applied to the operating member 50, the flexible piece 16 is deformed to bend so as to allow downward displacement of the first engagement portion 17 that is pressed against by the second engagement portion 35, thereby allowing sliding of the operating member 50 while providing a resistance that acts to retain the operating member 50 in the neutral position.

Moreover, the flexible portion 15 of this embodiment has the flexible piece 16 extending from the base main body 11 in the front-rear direction and being capable of elastic deformation so as to allow displacement of its displacement end portion in the vertical direction, as well as the first engagement portion 17 having a shape that gradually increases in vertical dimension from the neutral position toward both of the outer sides in the sliding direction. Accordingly, when the operating member 50 is operated in the sliding direction and the flexible piece 16 is elastically deformed, the first engagement portion 17 exerts on the second engagement portion 35 resistance forces generated by the flexible piece 16 behaving to cancel the elastic deformation, that is, a resistance force generated by the flexible piece 16 behaving to cancel the vertical displacement of the first engagement portion 17 (i.e., bending deformation of the flexible piece 16) and a resistance force generated by the flexible piece 16 behaving to cancel displacement of the first engagement portion 17 around an intersecting axis coinciding with a straight line, of straight lines parallel to the front-rear direction, that traverses the flexible portion 15 and that intersects the axis of rotation (i.e., torsional deformation of the flexible piece 16). Thus, the operating member 50 is more reliably retained in the neutral position.

Furthermore, the flexible piece 16 of this embodiment is in the form of a cantilever having the base end portion that is continuous with the base main body 11 and the displacement end portion that is an end portion on the side that is opposite to the base end portion and constitutes a free end, and the first engagement portion 17 is formed in the displacement end portion. Thus, it is easy to adjust the amount of displacement of the displacement end portion, or in other words, a retaining force that retains the operating member 50 in the neutral position.

Moreover, in the above-described embodiment, a structure in which the operating member 50 and the slider 30 are reliably guided in the sliding direction by the guiding portion 18 of the base 10 and the guided portion of the slider 30, as well as a structure in which disengagement of the slider 30 is prevented by the restricting portion of the base 10 coming into contact with the restricted surface of the slider 30 are simultaneously constructed by mounting the slider 30 to the base 10 in the fitting direction. Specifically, the slider 30 has the guided portion, which is shaped such that the guided portion can be removably fitted into the guiding portion 18 in the direction parallel to the axis of rotation and is guided by the guiding portion 18 in the sliding direction in the fitted state. The guiding portion 18 of the base 30 extends in the direction parallel to the sliding direction and has the first guiding surface, which restricts the guided portion in the fitted state from the first side with respect to the slide restriction direction, and the second guiding surface, which restricts the guided portion in the fitted state from the side that is opposite to the first side with respect to the slide restriction direction. Thus, a structure in which the operating member 50 and the slider 30 are reliably guided in the sliding direction without being displaced in the slide restriction direction relative to the base 10 is constructed by mounting the slider 30 to the base 10 so that the guiding portion 18 and the guided portion are in the fitted state. In addition, the slider 30 has the restricted surface, which is a surface that faces the side (upper side) that is opposite to the opposing surface 12a of the base 10 and extends parallel to the sliding direction and that is restricted by the restricting portion. The restricting portion of the base 10 has the sliding contact portion, which, in the fitted state, comes into contact with the restricted surface from the upper side, thereby restricting the slider 30, and comes into sliding contact with the restricted surface in the sliding direction, thereby allowing the slider 30 to slide. Also, the restricting portion is shaped such that, as the slider 30 approaches the opposing surface 12a in the fitting direction in the process until the guided portion is fitted into the guiding portion 18, the restricting portion comes into contact with the slider 30, thereby being deformed to bend in a direction in which the restricting portion is retracted from the slider 30 and allowing movement of the slider 30 in the fitting direction. Thus, a structure in which disengagement of the slider 30 is prevented by the restricting portion coming into contact with the restricted surface is constructed by mounting the slider 30 to the base 10 so that the guiding portion 18 and the guided portion are in the fitted state.

Moreover, with this composite operating device, the slider 30 is restricted from opposite sides of the guiding portions 19 and 20 with respect to the slide restriction direction by the first and second restricting portions 21 and 22. Thus, disengagement of the slider 30 in the fitted state is even more reliably prevented.

Furthermore, with this composite operating device, the first restricting portion 21 and the third restricting portion 23 are plane-symmetrical to each other, where the orthogonal plane is the plane of symmetry, and the second restricting portion 22 and the fourth restricting portion 24 are plane-symmetrical to each other, where the orthogonal plane is the plane of symmetry. Thus, rotation of the slider 30 about a straight line that passes through the slider 30, of straight lines in the orthogonal plane and parallel to the slide restriction direction, is suppressed. Accordingly, rattling of the operating member 50 and the slider 30 during sliding is suppressed.

Moreover, in the above-described embodiment, the first restricted wall 37 has a shape that is elongated in the sliding direction so as to contain one of the tangents to the retaining portion 31 that are parallel to the sliding direction, and the second restricted wall 38 has a shape that is elongated in the sliding direction so as to contain the other of the tangents to the retaining portion 31 that extend in the direction parallel to the sliding direction. Thus, the dimension between the first restricted wall 37 and the second restricted wall 38 is approximately equal to the diameter of the retaining portion 31, or in other words, the minimum length that is necessary for the operating member 50 to be rotatably retained. Accordingly, the dimension of the slider 30 in the slide restriction direction can be minimized.

Moreover, each sliding contact portion comes into line contact with the corresponding restricted surface. Thus, the friction force that acts between the sliding contact portion and the restricted surface is reduced. Accordingly, operating resistance during a sliding operation of the operating member 50 is reduced.

### Second Embodiment

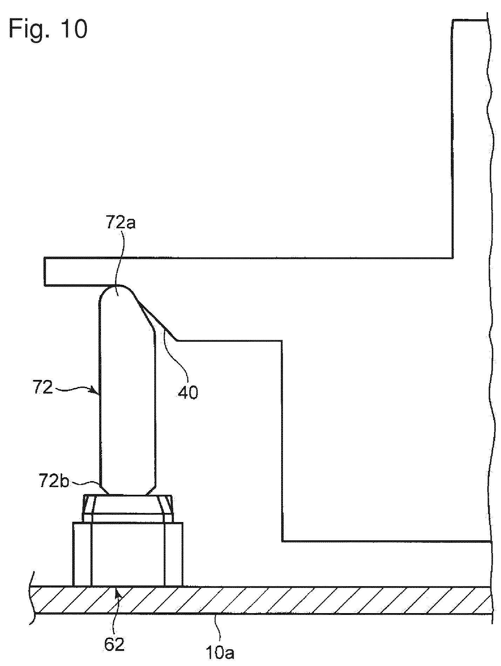

A second embodiment of the present invention will be described with reference to Fig. 10. Note that the second transmission member retaining portion is omitted from Fig. 10. Moreover, in the second embodiment, a description will be given only of portions that are different from the first embodiment, and a description of the same structures and effects as those of the first embodiment will be omitted. A composite operating device of the second embodiment is different from the composite operating device of the first embodiment with respect to the shapes of the transmission members, the shapes of the transmission member retaining portions (not shown), and the shapes of the transmission member pressing portions. In the description below, the side of the second transmission member 72 and the second transmission member pressing portion 40 will be taken as an example.

The second transmission member 72 of this embodiment has a shape that linearly extends in the direction (element pressing direction) parallel to the axis of rotation. An upper portion of the second transmission member 72 constitutes the pressed portion 72a, and a lower portion constitutes the element pressing portion 72b. Additionally, the second transmission member pressing portion 40 is inclined so as to be able to press the pressed portion 72a downward when the slider 30 slides to the left. Specifically, the second transmission member 40 has a shape whose dimension gradually increases in the element pressing direction from an outer side toward an inner side in the sliding direction. Also, the second transmission member retaining portion, which is not shown, retains the second transmission member 72 such that the second transmission member 72 can be displaced in the vertical direction relative to the second transmission member retaining portion.

In this embodiment, when the slider 30 slides to the left, the second transmission member pressing portion 40 presses the pressed portion 72a to the left. As a result, the second transmission member 72 is displaced in the element pressing direction (downward). Then, the element pressing portion 72b presses against the second detecting element 62.

Note that the embodiments disclosed herein are to be considered in all respects as illustrative and not restrictive. The scope of the invention is indicated by the appended claims rather than by the foregoing description of the embodiments, and all changes that come within the meaning and range of equivalency of the claims are intended to be embraced therein.

For example, in the above embodiments, examples in which the detecting elements include the first detecting element 61 and the second detecting element 62, and the transmission members include the first transmission member 71 and the second transmission member 72 have been described. However, either the first detecting element 61 and the first transmission member 71 or the second detecting element 62 and the second transmission member 72 can be omitted. In the case where, for example, the first detecting element 61 and the first transmission member 71 are omitted, the first transmission member retaining portion 25, the first transmission member pressing portion 39, and the first hole 12b are also omitted.

Moreover, in the first embodiment, an example in which the slider 30 includes the first clamp portion 45 and the second clamp portion 46 has been described. However, the clamp portions 45 and 46 may be omitted. In that case, for example, when the slider 30 slides to the right in the sliding direction, the pressed portion 72a is pressed against by the first transmission member pressing portion 39, and the first transmission member 71 rotates about the center shaft 25a to press against the first detecting element 61 with the element pressing portion 71b. Then, when the slider 30 returns to the neutral position, although the first transmission member 71 does not follow the slider 30, the pressed portion 71a is pushed upward due to the self-returning force of the first detecting element 61. Thus, the pressure of the first transmission member 71 on the first detecting element 61 is released.

## Claims

1. A composite operating device that is operable to rotate about a specific axis of rotation and operable to slide in a specific sliding direction that is orthogonal to the axis of rotation, the composite operating device comprising:
a base (10);
a slider (30) that is supported by the base (10) so as to be slidable in the sliding direction relative to the base (10);
an operating member (50) that is retained by the slider (30) so as to be rotatable about the axis of rotation and is operable so as to slide in the sliding direction together with the slider (30);
a tactile switch (61, 62) that is arranged to detect that the operating member (50) has been operated to slide to a specific sliding operation position in the sliding direction; and
a transmission member (71, 72) that is arranged to transmit an operating force acting on the slider (30) due to a sliding operation of the operating member (50) to the tactile switch (61, 62),
wherein the slider (30) comprises a transmission member pressing portion (39, 40) that is arranged to press the transmission member (71, 72) in the sliding direction, and
wherein the base (10) comprises a transmission member retaining portion (25, 26) that rotatably retains the transmission member (71, 72) so that when a pressed portion (71a, 72a) is pressed by the transmission member pressing portion (39, 40) in the sliding direction, the transmission member (71, 72) rotates and therefore causes an element pressing portion (71b, 72b) to press against the tactile switch (61, 62);
the transmission member (71, 72) comprises:
the pressed portion (71a, 72a) that is arranged to be pressed by the slider (30) in the sliding direction; and
the element pressing portion (71b, 72b) that is arranged to press the tactile switch (61, 62) in an element pressing direction that is parallel to the axis of rotation, and
a pair of plate portions (71c, 72c) facing each other in a direction orthogonal to the sliding direction;
wherein the pressed portion (71 a, 72a) has a cylindrical shape with an axis extending in the direction orthogonal to the sliding direction and parallel to a center shaft (25 a, 26a) of the transmission member retaining portion (25, 26),
wherein the element pressing portion (71b, 72b) has the same shape as the pressed portion (71 a, 72a);
wherein the pressed portion (71a, 72a) and the element pressing portion (71b, 72b) are each disposed between the pair of plate portions (71c, 72c) so as to connect the plate portions (71c, 72c) to each other;
wherein the pair of plate portions (71c, 72c) each have a bearing hole (71d, 72d) into which the center shaft (25a, 26a) is inserted,
wherein the pressed portion (71a, 72a), the element pressing portion (71b, 72b), and the bearing hole (71d, 72d) are arranged in a triangle.

2. The composite operating device according to claim 1,
wherein the slider (30) comprises a retaining portion (31) that retains the operating member (50) from outside such that the operating member (50) is rotatable about the axis of rotation, and
the transmission member pressing portion (39, 40) is formed within a region that is sandwiched by a pair of straight lines that pass through respective ends of the retaining portion (31) in a direction orthogonal to the sliding direction, the direction being orthogonal to both the sliding direction and the direction parallel to the axis of rotation, and that extend in a direction parallel to the sliding direction.

3. The composite operating device according to claim 2,
wherein the transmission member pressing portion (39, 40) is formed within a region that is sandwiched by a pair of straight lines passing through respective ends of the retaining portion (31) in the sliding direction and extending in a direction parallel to the direction orthogonal to the sliding direction.

4. The composite operating device according to any of claims 1 to 3,
wherein the transmission member retaining portion (25, 26) retains the transmission member (71, 72) such that the transmission member (71, 72) is rotatable about an axis extending in a direction orthogonal to both the sliding direction and the direction parallel to the axis of rotation, and
the transmission member (71, 72) is shaped such that when the pressed portion (71a, 72a) of the transmission member (71, 72) is pressed by the transmission member pressing portion (39, 40) in the sliding direction, the transmission member (71, 72) rotates about the axis, thereby causing the element pressing portion (71b, 72b) of the transmission member (71, 72) to be displaced in the element pressing direction.

5. The composite operating device according to claim 4,
wherein the pressed portion (71a, 72a) has a circular outer circumferential surface with a center axis extending in a direction parallel to the axis of the transmission member (71, 72), and
the slider (30) comprises a clamp portion (45, 46) that holds the pressed portion (71a, 72a) between the clamp portion (45, 46) and the transmission member pressing portion (39, 40) from both sides in the sliding direction.

## Patentansprüche

1. Zusammengesetzte Bedienvorrichtung, welche durch Bedienung um eine spezifische Drehachse herum gedreht werden kann, und welche durch Bedienung in einer spezifischen Verschieberichtung verschoben werden kann, welche senkrecht zu der Drehachse ist, wobei die zusammengesetzte Bedienvorrichtung aufweist:
eine Basis (10);
einen Schieber (30), der von der Basis (10) derart getragen ist, dass er in der Verschieberichtung relativ zu der Basis (10) verschiebbar ist;
ein Bedienelement (50), das durch den Schieber (30) derart gehalten wird, dass es um die Drehachse drehbar ist, und das derart bedienbar ist, dass es zusammen mit dem Schieber (30) in der Verschieberichtung verschoben wird;
einen Tastschalter (61, 62), der eingerichtet ist, zu erfassen, dass das Bedienelement (50) derart bedient wurde, dass es zu einer spezifischen Verschiebevorgangsposition in der Verschieberichtung verschoben wurde; und
ein Übertragungselement (71, 72), das eingerichtet ist, eine Betätigungskraft, die auf den Schieber (30) aufgrund eines Verschiebevorgangs des Bedienelements (50) wirkt, auf den Tastschalter (61, 62) zu übertragen,
wobei der Schieber (30) einen Übertragungselementdrückabschnitt (39, 40) aufweist, der eingerichtet ist, das Übertragungselement (71, 72) in der Verschieberichtung zu drücken, und
wobei die Basis (10) einen Übertragungselementfesthalteabschnitt (25, 26) aufweist, der das Übertragungselement (71, 72) derart drehend festhält, dass, wenn ein gedrückter Abschnitt (71a, 72a) durch den Übertragungselementdrückabschnitt (39, 40) in der Verschieberichtung gedrückt wird, das Übertragungselement (71, 72) sich dreht und dadurch einen Elementdrückabschnitt (71b, 72b), gegen den Tastschalter (61, 62) drückt;
wobei das Übertragungselement (71, 72) aufweist:
den gedrückten Abschnitt (71a, 72a), der eingerichtet ist, durch den Schieber (30) in der Verschieberichtung gedrückt zu werden; und
den Elementdrückabschnitt (71b, 72b), der eingerichtet ist, den Tastschalter (61, 62) in einer Elementdrückrichtung zu drücken, die parallel zu der Drehachse ist, und
ein Paar von Plattenabschnitten (71c, 72c), welche einander in einer Richtung senkrecht zu der Verschieberichtung gegenüber liegen;
wobei der gedrückte Abschnitt (71a, 72a) eine zylindrische Form mit einer Achse hat, die sich in der Richtung senkrecht zu der Verschieberichtung und parallel zu einem Zentralschaft (25A, 26A) des Übertragungselementfesthalteabschnitts (25, 26) erstreckt,
wobei der Elementdrückabschnitt (71b, 72b) die gleiche Form wie der gedrückte Abschnitt (71a, 72a) aufweist;
wobei der gedrückte Abschnitt (71a, 72a) und der Elementdrückabschnitt (71b, 72b) jeweils zwischen dem Paar von Plattenabschnitten (71c, 72c) angeordnet sind, und die Plattenabschnitte (71c, 72c) miteinander verbinden;
wobei das Paar von Plattenabschnitten (71c, 72c) jeweils eine Lageröffnung (71d, 72d) aufweist, in welche der Zentralschaft (25a, 26a) eingesetzt ist,
wobei der gedrückte Abschnitt (71a, 72a), der Elementdrückabschnitt (71b, 72b) und die Lageröffnung (71d, 72d) in einem Dreieck angeordnet sind.

2. Zusammengesetzte Bedienvorrichtung gemäß Anspruch 1,
wobei der Schieber (30) einen Festhalteabschnitt (31) aufweist, der das Bedienelement (50) von außen derart festhält, dass das Bedienelement (50) um die Drehachse drehbar ist, und
wobei der Übertragungselementdrückabschnitt (39, 40) innerhalb eines Bereiches gebildet ist, der zwischen einem Paar von geraden Linien liegt, die durch jeweilige Enden des Festhalteabschnitts (31) in einer Richtung senkrecht zu der Verschieberichtung hindurch gehen, wobei die Richtung sowohl senkrecht zu der Verschieberichtung als auch senkrecht zu der Richtung parallel zu der Drehachse ist, und die sich in einer Richtung parallel zu der Verschieberichtung erstrecken.

3. Zusammengesetzte Bedienvorrichtung gemäß Anspruch 2,
wobei der Übertragungselementdrückabschnitt (39, 40) innerhalb eines Bereichs gebildet ist, der zwischen einem Paar von geraden Linien liegt, die durch jeweilige Enden des Festhalteabschnitts (31) in der Verschieberichtung hindurchgehen und die sich in einer Richtung parallel zu der Richtung senkrecht zu der Verschieberichtung erstrecken.

4. Zusammengesetzte Bedienvorrichtung gemäß einem der Ansprüche 1 bis 3,
wobei der Übertragungselementfesthalteabschnitt (25, 26) das Übertragungselement (71, 72) derart festhält, dass das Übertragungselement (71, 72) um eine Achse drehbar ist, die sich in einer Richtung sowohl senkrecht zu der Verschieberichtung als auch senkrecht zu der Richtung parallel zu der Drehachse erstreckt, und
wobei das Übertragungselement (71, 72) derart gebildet ist, dass, wenn der gedrückte Abschnitt (71a, 72a) des Übertragungselements (71, 72) durch den Übertragungselementdrückabschnitt (39, 40) in der Verschieberichtung gedrückt wird, das Übertragungselement (71, 72) um die Achse dreht, wodurch der Elementdrückabschnitt (71b, 72b) des Übertragungselements (71, 72) in der Elementdrückrichtung versetzt wird.

5. Zusammengesetzte Bedienvorrichtung gemäß Anspruch 4,
wobei der gedrückte Abschnitt (71a, 72a) eine kreisförmige äußere Umfangsoberfläche mit einer Zentralachse aufweist, die sich in einer Richtung parallel zu der Achse des Übertragungselements (71, 72) erstreckt, und
wobei der Schieber (30) einen Klammerabschnitt (45, 46) aufweist, der den gedrückten Abschnitt (71a, 72a) zwischen dem Klammerabschnitt (45, 46) und dem Übertragungselementdrückabschnitt (39, 40) von beiden Seiten in der Verschieberichtung hält.

## Revendications

1. Dispositif d'actionnement composite pouvant être actionné pour tourner autour d'un axe de rotation spécifique et pour coulisser dans une direction de coulissement spécifique qui est orthogonale à l'axe de rotation, le dispositif d'actionnement composite comprenant :
une base (10) ;
un coulisseau (30) qui est supporté par la base (10) de manière à pouvoir coulisser dans la direction de coulissement rapport à la base (10) ;
un élément d'actionnement (50) qui est retenu par le coulisseau (30) de manière à pouvoir tourner autour de l'axe de rotation et qui est actionnable de manière à coulisser dans la direction de coulissement conjointement avec le coulisseau (30) ;
un interrupteur tactile (61, 62) qui est agencé pour détecter que l'élément d'actionnement (50) a été actionné pour coulisser vers une position d'opération de coulissement spécifique, dans la direction de coulissement et
un élément de transmission (71, 72) qui est agencé pour transmettre une force d'actionnement agissant sur le coulisseau (30), du fait d'une opération de coulissement de l'élément d'actionnement (50), à l'interrupteur tactile (61, 62),
dans lequel le coulisseau (30) comprend une partie presseuse d'élément de transmission (39, 40) qui est agencée pour presser l'élément de transmission (71, 72) dans la direction de coulissement, et
dans lequel la base (10) comprend une partie de retenue d'élément de transmission (25, 26) qui retient l'élément de transmission (71, 72) en rotation, de manière que lorsqu'une partie pressée (71a, 72a) est pressée par la partie presseuse d'élément de transmission (39, 40) dans la direction de coulissement, l'élément de transmission (71, 72) tourne et fait donc qu'une partie presseuse d'élément (71b, 72b) appuie contre l'interrupteur tactile (61, 62) ;
l'élément de transmission (71, 72) comprend :
la partie pressée (71a, 72a) qui est agencée pour être pressée par le coulisseau (30) dans la direction de coulissement ; et
la partie presseuse d'élément (71b, 72b) qui est agencée pour appuyer sur l'interrupteur tactile (61, 62) dans une direction de pression d'élément qui est parallèle à l'axe de rotation, et
une paire de parties formant plaques (71c, 72c) en regard l'une de l'autre dans une direction orthogonale à la direction de coulissement ;
dans lequel partie pressée (72a, 72b) présente une forme cylindrique, avec un axe s'étendant dans la direction orthogonale à la direction de coulissement et parallèle à un arbre central (25a, 26a) de la partie de retenue d'élément de transmission (25, 26),
dans lequel la partie presseuse d'élément (71b, 72b) présente la même forme que la partie pressée (71a, 72a) ;
dans lequel la partie pressée (71a, 72a) et la partie presseuse d'élément (71b, 72b) sont disposées chacune entre les deux parties formant plaques (71c, 72c), de manière à relier les parties formant plaques (71c, 72c) l'une à l'autre ;
dans lequel les deux parties formant plaques (71c, 72c) présentent chacune un trou de palier (71d, 72d) dans lequel l'arbre central (25a, 26a) est inséré,
dans lequel la partie pressée (71a, 72a), la partie presseuse d'élément (71b, 72b) et le trou de palier (71d, 72d) sont disposés en triangle.

2. Dispositif d'actionnement composite selon la revendication 1,
dans lequel le coulisseau (30) comprend une partie de retenue (31) qui retient l'élément d'actionnement (50) depuis l'extérieur, de manière que l'élément d'actionnement (50) puisse tourner autour de l'axe de rotation, et la partie presseuse d'élément de transmission (39, 40) est formée au sein d'une région qui est prise en sandwich par une paire de droites qui passent par des extrémités respectives de la partie de retenue (31), dans une direction orthogonale à la direction de coulissement, la direction étant orthogonale à la fois à la direction de coulissement et à la direction parallèle à l'axe de rotation, et qui s'étendent dans une direction parallèle à la direction de coulissement.

3. Dispositif d'actionnement composite selon la revendication 2,
dans lequel la partie presseuse d'élément de transmission (39, 40) est formée au sein d'une région qui est prise en sandwich par une paire de droites passant par des extrémités respectives de la partie de retenue (31) dans la direction de coulissement et s'étendant dans une direction parallèle à la direction orthogonale à la direction de coulissement.

4. Dispositif d'actionnement composite selon l'une quelconque des revendications 1 à 3,
dans lequel la partie de retenue d'élément de transmission (25, 26) retient l'élément de transmission (71, 72) de manière que l'élément de transmission (71, 72) puisse tourner autour d'un axe s'étendant dans une direction orthogonale à la fois à la direction de coulissement et à la direction parallèle à l'axe de rotation, et
l'élément de transmission (71, 72) est de telle forme que lorsque la partie pressée (71a, 72a) de l'élément de transmission (71, 72) est pressée par la partie presseuse d'élément de transmission (39, 40), dans la direction de coulissement, l'élément de transmission (71, 72) tourne autour de l'axe, en faisant ainsi que la partie presseuse d'élément (71b, 72b) de l'élément de transmission (71, 72) se déplace dans la direction de pression d'élément.

5. Dispositif d'actionnement composite selon la revendication 4,
dans lequel la partie pressée (71a, 72a) présente une surface circonférentielle extérieure circulaire avec un axe central s'étendant dans une direction parallèle à l'axe de l'élément de transmission (71, 72), et le coulisseau (30) comprend une partie étrier (45, 46) qui maintient la partie pressée (71a, 72a) entre la partie étrier (45, 46) et la partie presseuse d'élément de transmission (39, 40) depuis les deux côtés dans la direction de coulissement.
